Europäisches Patentamt

European Patent Office

Office européen des brevets

(11) Veröffentlichungsnummer: **0 214 583**

**A1**

(12) ## EUROPÄISCHE PATENTANMELDUNG

(21) Anmeldenummer: 86112037.6

(22) Anmeldetag: 30.08.86

(51) Int. Cl.⁴: **B 23 B 29/034**

(30) Priorität: 10.09.85 CH 3901/85

(43) Veröffentlichungstag der Anmeldung:
18.03.87 Patentblatt 87/12

(84) Benannte Vertragsstaaten:
AT BE CH DE FR GB IT LI NL SE

(71) Anmelder: K.R. Pfiffner Engineering
Bühlhaldenweg 3
CH-8135 Langnau a. Albis(CH)

(72) Erfinder: Stoffel, Kurt
Zugerstrasse 30
CH-8810 Horgen(CH)

(74) Vertreter: EGLI-EUROPEAN PATENT ATTORNEYS
Horneggstrasse 4
CH-8008 Zürich(CH)

(54) Plandreh- und Ausdreh-Kopf.

(57) Das Gerät weist einen Antriebskörper (1) mit einem Befestigungszapfen (2) und einem Mitnehmerflansch (4) auf. In letzterem ist eine, ein Werkzeug tragender Planschlitten (10) verschiebbar geführt. Die Verschiebung erfolgt durch eine Führungsrolle (15), die in eine Führungsnut (52) eines als Kurvenscheibe ausgebildeten Planetensteges (48) eines Planetengetriebes (38) mündet. Das Planetengetriebe (38) bildet zusammen mit einem weiteren gleichartigen Planetengetriebe (37) ein Ueberlagerungsgetriebe (35), auf das die Drehbewegung eines ringförmigen Motors (27) überlagert wird. Durch die hierbei entstehende Drehbewegung der Kurvenscheibe mit der Führungsnut (52) wird die Verschiebung des Planschlittens (10) bewirkt. Durch einen Hülltrieb (63) wird die Drehbewegung des Motors (27) einem Tachogenerator (59) mit einem Impulsgeber (10) übertragen. Die Impulse des Impulsgebers werden in einem Prozessor bearbeitet, durch den der Motor (27) und damit die Verschiebebewegung des Planschlittens (10) gesteuert wird. Das Gerät zeichnet sich gegenüber bekannten Geräten dadurch aus, dass der im Gehäuse (20) ringförmig untergebrachte Motor (27) und das Ueberlagerungsgetriebe (35) eine selbständige Einheit darstellen, die keine zusätzlichen Antriebsteile auserhalb des Gerätes benötigt.

./...

- 1 -                    0214583

## Plandreh- und Ausdreh-Kopf

Die Erfindung betrifft einen Plandreh- und Ausdreh-Kopf, der einen an der Stirnseite der Arbeitsspindel einer zerspanenden Maschine oder einer Bearbeitungseinheit befestigbaren, mit einem Befestigungszapfen versehenen zylinderförmigen Antriebskörper aufweist, wobei an dem Antriebskörper stirnseitig ein Werkzeugschlitten angeordnet ist, der über ein den Antriebskörper umgebendes Ueberlagerungsgetriebe radial verschiebbar ist, wobei für die Verschiebebewegung des Werkzeugschlittens dem Ueberlagerungsgetriebe eine durch einen Motor erzeugte Drehbewegung überlagerbar ist.

Plandreh- und Ausdreh-Köpfe sind in verschiedenen Ausführungen bekannt. Sie sind als Anbaugerät für Bearbeitungseinheiten, d.h. für herkömmliche Fräsmaschinen, Bohrwerke und Baueinheiten, ausgebildet, mit dem Dreharbeiten ausgeführt werden können, die eine Vorschubbewegung senkrecht zur Drehachse der Arbeitsspindel erfordern. Ist die Arbeitsspindel in einer Pinole oder einem Verschiebeschlitten gelagert, kann mit dem Plandreh- und Ausdreh-Kopf eine unabhängige Längsbewegung ausgeführt werden, so dass dieser Kopf nicht nur zum Plandrehen, sondern auch für Ausbohrarbeiten mit grösserem Durchmeser eingesetzt
werden kann.

Während bei einfachen Plandreh- und Ausdreh-Köpfen die
Verschiebung des auf dem Werkzeugschlitten abgestützten
Werkzeuges manuell durchgeführt wird, ist auch eine mit
einer Steuereinrichtung durchführbare automatische
Radialverschiebung des Werkzeuges gegenüber der Achse der
Antriebsspindel bekannt (DE-OS 21 43 924 und EP-Anmeldung
54 838). Nchteilig ist jedoch bei beiden bekannten
Ausführungsformen, dass im Maschinengehäuse ein
Antriebsmotor untergebracht werden muss, der von einer
Steuerung, z.B. einer NC-Einrichtung gesteuert wird. Dies
bedeutet einen verhältnismässig grossen Platzbedarf, der
vor allem bei einer Pinolenlagerung der Antriebsspindel
nicht zur Verfügung steht, so dass diese bekannten
Plandreh- und Ausdreh-Köpfe für das Ausdrehen von
grösseren Bohrungen nur mit erheblichen Schwierigkeiten
eingesetzt werden können.

Hier setzt die Erfindung ein, der die Aufgabe
zugrundeliegt, einen Plandreh- und Ausdreh-Kopf der
eingangs beschriebenen Art so auszugestalten, dass die
separate Anordnung eines Antriebsmotors für die
Verschiebung des Werkzeuges nicht mehr mit entsprechendem
Platzaufwand separat angeordnet werden muss und trotzdem
das Bauvolumen des Plandreh- und Ausdreh-Kopfes praktisch
nicht vergrössert wird.

Diese Aufgabe wird gemäss der Erfindung dadurch gelöst,
dass der Motor ringförmig den Antriebskörper umgibt, im
Gehäuse dieses Kopfes gelagert ist und mit dem
Ueberlagerungsgetriebe in Wirkungsverbindung steht.

Zweckmässig ist der Stator des Motors in dem Gehäuse gelagert, welches an dem Ständer, an der Pinole oder an dem Schlitten der spanenden Maschine gegen tangential wirkende Kräfte befestigt ist, während der Rotor mit dem drehbaren Teil des Ueberlagerungsgetriebes in Wirkungsverbindung steht.

Die Erfindung ist in der Zeichnung in einem Ausführungsbeispiel dargestellt und nachfolgend beschrieben. Die Figur zeigt als Ausführungsbeispiel der Erfindung einen Plandreh- und Ausdreh-Kopf in einem Längsschnitt.

In der Figur ist ein zylinderförmiger Antriebskörper 1 dargestellt, der auf der einen Seite einen kegelförmigen Befestigungszapfen 2 aufweist und auf dessen anderer Seite ein Mitnehmerflansch 4 angeformt ist. Der Befestigungszapfen 2 ist in einer Arbeitsspindel einer gestrichelt angedeuteten zerspanenden Maschine befestigt, die eine entsprechend geformte kegelige Bohrung aufweist. Zur Mitnahme des Antriebskörpers 1 durch die Arbeitsspindel sind Nutensteine vorgesehen.

Der Mitnehmerflansch 4 weist eine radial durch die Drehachse 8 der Arbeitsspindel gehende Führungsnut 7, z.B. eine Schalbenschwanznut auf, in welcher ein Planschlitten 10 verschiebbar geführt ist. Der Planschlitten 10 ist der Träger eines Bearbeitungswerkzeuges (nicht dargestellt). Auf der dem Werkzeug abgewandten Seite des Planschlittens 10 ist ein Zapfen 12 angeordnet, der eine Bohrung 13 aufweist. In der Bohrung 13, ist eine Welle 14 eingesetzt, von der ein Teil aus der Bohrung 13 ragt, der eine Führungsrolle 15 trägt, deren Funktion später noch beschrieben wird. Der Zapfen 12 erstreckt sich durch eine in dem
Mitnehmerflansch 4 angeordnete Ausnehmung 16.

Der Antriebskörper ist von einem Gehäuse 20 umgeben, das
sich aus einem Befestigungsflansch 21, einem
aussenliegenden Zylinderteil 22, einem innenliegenden
Stutzen 23 und einer Nebenkammer 55 zusammensetzt. Das
freie Ende des aussenliegenden Zylinderteils 22 ist von
einer Abdeckung 25 überdeckt, die am Aussenumfang des
Mitnehmerflansches 4 gelagert ist. Die Abdeckung 25
schützt zusammen mit dem Gehäuse die in ihrem Innern
angeordneten Teile gegen das Eindringen von Schmutz und
festen Teilen. Die Hülse 24 ist ein Lagerteil für das
feststehende Hohlrad 42. Der abgedichtete Deckel 56
verhindert das Eindringen von Schmutz und festen Teilen
in die Nebenkammer 55.

In dem durch den aussenliegenden Zylinderteil 22 und den
innenliegenden Stutzen 23 gebildeten Ringraum 26 ist ein
Motor 27 gelagert. Dieser ist in der Figur als
elektrischer Gleichstrommotor dargestellt, könnte jedoch
auch ein Hydromotor o.dgl. sein. Der Motor 27 ist
ringförmig ausgebildet und weist einen mit einer Wicklung
28 versehenen Rotor 29 und einen Stator 30 auf, welch
letzterer auf der Innenseite des aussenliegenden
Zylinderteils 22 fest abgestützt ist. Der Stator 30 ist
aus Permanentmagneten gebildet. Solche ringförmigen
Elektromotoren sind auf dem Markt erhältlich, z.B. durch
Litton u.a.

Der Motor 27 ist auf einer Lagerhülse 32 fest angeordnet,
die auf dem Aussenumfang des innenliegenden Stutzens 23
des Gehäuses 20 drehbar gelagert ist. An der Lagerhülse 32 ist ein Flansch 33 mit einem zylindrischen Kragen 34 angeformt.

Zwischen dem Motor 27 und dem Mitnehmerflansch 4 ist ein Ueberlagerungsgetriebe 35 angeordnet, das aus zwei hintereinander geschalteten gleichartigen Planetengetrieben 37, 38 zusammengesetzt ist. Die beiden Planetengetriebe 37, 38 weisen ein gemeinsames Sonnenrad 40 und Hohlräder 41, 42 auf. Das dem Motor 27 näherliegende Planetengetriebe 37 weist einen Steg 43 auf, in dem mittels Bolzen 44 eine Anzahl Planetenräder 45 drehbar gelagert sind. Der Steg 43 ist mit dem Antriebskörper 1 fest, z.B. mittels einer Keilverbindung 46, verbunden.

Das auf der Seite des Mitnehmerflansches 4 angeordnete Planetengetriebe 38 weist einen Steg 48 auf, in dem mittels Bolzen 49 Planetenräder 50 drehbar gelagert sind. Auf dem Steg 48 befindet sich ausser dem eine Hülse 47, auf welcher das gemeinsame Sonnenrad 40 drehbar gelagert ist.

Der Steg 48 des Planetetengetriebes 38 ist als Kurvenscheibe ausgebildet und weist auf der dem Planetengetriebe 38 abgewandten Seite eine Führungsnut 52 auf, die als archimedische Spirale oder als Spirale mit beliebiger Steigung ausgebildet ist. Die Führungsnut 52 dient der Aufnahme der Führungsrolle 15 des Planschlittens 10. Weist der Steg 48 eine gegenüber dem Antriebskörper 1 unterschiedliche Drehzahl auf, wird die Führungsrolle 15 und damit der Planschlitten 10 senkrecht zur Drehachse 8 der Antriebsspindel bewegt.

Am Aussenumfang des aussenliegenden Zylinderteils 22 ist eine Nebenkammer 55 angesetzt, in welcher in einer Ausnehmung 58 eine Kombination, bestehend aus einem Tachogenerator 59 und einem Impulsgeber 60 befestigt ist. Der Tachogenerator 59 weist eine Welle 61 mit einer glockenförmigen Riemenscheibe 62 auf, welch letztere ein Teil eines Hülltriebes 63 ist, der aus der Riemenscheibe 62, einer am Aussenumfang der Lagerhülse 32 angebrachten Verzahnung 64 und einem Hüllglied 65, z.B. einem Zahnriemen, besteht. Dreht die Lagerhülse 32, wird diese Drehbewegung über den Hülltrieb 63 an die Welle 61 der Tachogenerator-/Impulsgeber-Kombination übertragen. Die Kombination 59, 60 bildet das Rückmeldesystem, welches die entsprechenden Spannungen und Impulse liefert, die in einem Prozessor (nicht dargestellt) verarbeitet und für die Lagerregelung des Motors 27 benützt werden.

Die Signalgeber 65, 68, z.B. optoelektrische, induktive oder mechanische Schalter, welche aufgrund einer Codierung oder Rasterung auf den Codestreifen 66, 69 betätigt werden dienen der Erkennung der absoluten mechanischen Endlage der Führungsrolle 15 in der Spirale 52 des Stegs 48, womit einer Kollision des Zapfens 12 mit der Innenfläche der Ausnehmung 16 im Mitnehmerflansch 4 vorgebeugt werden kann. Eine spezielle elektronische Auswertungslogik in SMD (Surface mounting device)-Technologie ist auf der Leiterplatte 67 in der Ausnehmung 58 untergebracht, welche auch in der Lage ist, einen Referenzpunkt als Absolutposition an einen CNC-Leitprozessor zu übergeben. Dies geschieht dadurch, dass aufgrund der unterschiedlichen Drehwinkel der aussenverzahnten Lagerhülse 32 ($600^{\circ}$ pro Umdrehung des Stegs 48) und der Riemenscheibe 62 ($720^{\circ}$ pro Umdrehung des Stegs 48) auf den Codierstreifen 66, 69 jeweils 2 Codierungen derart angebracht werden können, dass zwei
bestimmte Signalgeber 65, 68 nur ein mal pro Umdrehung
der Spirale 52 gleichzeitig ansprechen und somit eine
logische UND-Verknüpfung dieser beiden Signalgeber 65, 68
einer Absolutposition der 3 Rotationskörper (Steg 48,
Riemenscheibe 62 und Lagerhülse 32) entspricht.

Der beschriebene Plandreh- und Ausdreh-Kopf kann
beispielsweise für den Einsatz auf einer CNC-gesteuerten
Bearbeitungseinheit vorgesehen werden, jedoch ist er auch
bei andern CNC-gesteuerten Maschinen anwendbar. Der
Antriebskörper 1 wird mit einem Steilkegel 2, z.B. ISO
30, in der Arbeitsspindel 5 aufgenommen und durch eine
nicht dargestellte Spannstange festgezogen. Der
stillstehende Teil, d.h. das Gehäuse 20, wird z.B. durch
drei Gewindestifte 74 auf den Lagerflansch der
Bearbeitungseinheit, z.B. der Pinole, gegen tangential
wirkende Kräfte fixiert. Der elektrische Anschluss des
Motors 27 und des Messmittels 59, 60 wird durch eine
Steckverbindung (nicht dargesteltl) hergestellt.

Die Uebertragung des Drehmomentes auf den Antriebskörper
1 erfolgt durch einen in der Spindel montierten
Nutenstein, der in die Ausnehmungen 6 des Antriebskörpers
1 ragt. Beim Betrieb dreht der mit dem Antriebskörper 1
gekuppelte motorseitige Steg 43 des Planetengetriebes 37
mit der Spindeldrehzahl. Das Hohlrad 41 dieses
Planetengetriebes wird vom Motor 27 (der unter Spannung
steht) im Stillstand gehalten, so dass sich die
Planetenräder 45 auf dem Hohlrad 41 abwälzen und das den
beiden Planetengetrieben 37, 38 gemeinsame Sonnenrad 40
antreiben. Durch das Sonnenrad 40 werden die
Planetenräder 50 des planschlittenseitigen
Planetengetriebes 38 gedreht, die sich auf dem Hohlrad 42 des Planetengetriebes 38, das in der Hülse 24 feststehend angebracht ist, abwälzen, wodurch der die Planetenräder 50 tragende Steg 48 in gleicher Drehrichtung und mit gleicher Drehzahl wie der Antriebskörper 1 angetrieben wird. Es folgt somit keine Bewegung des Planschlittens 10. Dies ist beispielsweise der Betriebszustand des Kopfes beim Zylindrischdrehen.

Durch den Motor 27 kann dem Hohlrad 41 des Planetengetriebes 37 eine Drehbewegung im Uhrzeiger- oder Gegenuhrzeigersinn erteilt werden. Durch diese Ueberlagerungsbewegung wird der Steg 48 des Planetengetriebes 38 und damit die darin eingearbeitete Spirale gedreht, so dass die Führungsrolle 15 und damit der Planschlitten 10 bewegt werden. Der Hub des Planschlittens 10 kann zweckmässig bei einer Drehung der Spirale im Steg 48 von 360$^\circ$ durchfahren werden. Die Verwendung einer archimedischen Spirale als Führung für die Führungsrolle ergibt eine beträchtliche Kraftverstärkung unmittelbar beim Planschlitten 10, was im Hinblick auf die Belastung des Kopfes günstig ist.

Wenn beispielsweise der Impulsgeber 60 pro Umdrehung 1250 Impulse erzeugt und bei 4-fach Auswertung sowie einem Verhältnis Impulsgeber 720$^\circ$ = Steg 360$^\circ$ für den gesamten Planhub von z.B. 10 mm 10 000 Impulse zur Verfügung stehen, so entsteht ein Impuls einer Länge von 1 µm. Es können somit sehr hohe Genauigkeiten mit dem beschriebenen Plandreh- und Ausdreh-Kopf erreicht werden.

Der Vorteil des beschriebenen Kopfes besteht darin, dass er ein kleines Bauvolumen aufweist und trotzdem den Antriebsmotor enthält, so dass er eine autonome Einheit darstellt.

## Patentansprüche

1. Plandreh- und Ausdreh-Kopf, der einen an der
   Stirnseite einer Arbeitsspindel (5) einer spanenden
   Maschine befestigbaren, mit einem Befestigungszapfen
   (2) versehenen zylinderförmigen Antriebskörper (1)
   aufweist, wobei an dem Antriebskörper stirnseitig ein
   Werkzeugschlitten (10) angeordnet ist, der über ein
   den Antriebskörper umgebendes Ueberlagerungsgetriebe
   (35) radial verschiebbar ist, wobei für die
   Verschiebebewegung des Werkzeugschlittens dem
   Ueberlagerungsgetriebe eine durch einen Motor (27)
   erzeugte Drehbewegung überlagerbar ist, dadurch
   gekennzeichnet, dass der Motor (27) ringförmig den
   Antriebskörper (1) umgibt, in einem Gehäuse (20)
   dieses Kopfes gelagert ist und mit dem
   Ueberlagerungsgetriebe (35) in Wirkungsverbindung
   steht.

2. Plandreh- und Ausdreh-Kopf nach Anspruch 1, dadurch
   gekennzeichnet, dass der Stator (30) des Motors (27)
   in dem Gehäuse (20) gelagert, das am Ständer, an der
   Pinole oder an dem Schlitten der spanenden Maschine
   gegen tangential wirkende Kräfte befestigt ist,
   während der Rotor (29) mit einem drehbaren Teil (32,
   33, 34) des Ueberlagerungsgetriebes in
   Wirkungsverbindung steht.

3. Plandreh- und Ausdreh-Kopf nach Anspruch 1 oder 2,
   dadurch gekennzeichnet, dass das
   Ueberlagerungsgetriebe (35) aus zwei
   hintereinandergeschalteten, gleichartigen
   Planetengetrieben (37, 38) zusammengesetzt ist, wobei der Steg (43) des ersten auf der Seite der
Bearbeitungseinheit angeordneten Planetengetriebes
(37) mit dem Antriebskörper (1) gekuppelt und der Steg
(48) des zweiten, auf der Seite des Werkzeugschlittens
(10) angeordneten Planetengetriebes (38) auf dem
Antriebskörper (1) drehbar gelagert ist, während das
Hohlrad (41) des ersten Planetengetriebes (37) in
einem zylinderförmigen Kragen (34) des drehbaren
Teiles (32, 33, 34) fest angeordnet ist, der auf einem
innenliegenden Stutzen (23) und das Hohlrad (42) des
zweiten Planetengetriebes (38) in einem Lagerteil (24)
des aussenliegenden Zylinderteils (22) angeordnet ist,
während ein beiden Planetengetrieben gemeinsames
Sonnenrad (40) auf einem mit dem Steg (48) des zweiten
Planetengetriebes (38) verbundenen Lagerhülse (47)
drehbar geführt ist.

4. Plandreh- und Ausdreh-Kopf nach einem der Ansprüche 1
bis 3, dadurch gekennzeichnet, dass der Steg (48) des
zweiten Planetengetriebes (38) als Kurvenscheibe
ausgebildet ist, wobei die Kurvenscheibe eine
stirnseitig angeordnete Führungsnut (52) in Form einer
archimedischen Spirale oder einer Spirale mit einem
beliebigen Steigungsverhältnis aufweist.

5. Plandreh- und Ausdreh-Kopf nach einem der Ansprüche 1
bis 4, dadurch gekennzeichnet, dass der Antriebskörper
(1) einen Mitnehmerflansch (4) zur Führung des
Werkzeugschlittens (10) aufweist, wobei der
Werkzeugschlitten mit einer Führungsrolle (15)
ausgerüstet ist, welche in die Führungsnut (52) der
Kurvenscheibe ragt.

6. Plandreh- und Ausdreh-Kopf nach einem der Ansprüche 1 bis 5, dadurch gekennzeichnet, dass auf dem Aussenumfang des aussenliegenden Zylinderteils (22) des Gehäuses (20) eine Nebenkammer (55) angesetzt ist, welche der Aufnahme eines Messmittels dient.

7. Plandreh- und Ausdreh-Kopf nach Anspruch 6, dadurch gekennzeichnet, dass das Messmittel, z.B. eine Tachogenerator/Impulsgeber-Kombination (59, 60) in einer Aussparung (58) der Nebenkammer untergebracht ist, wobei für die Uebertragung der Drehzahl des Hohlrades (41) des ersten Planetengetriebes (37) auf der Welle (61) der Tachogenerator/Impulsgeber-Kombination (59, 60) ein Getriebe, z.B. ein Hüllgetriebe (63) mit einem Zahnriemen (70), angekuppelt ist.

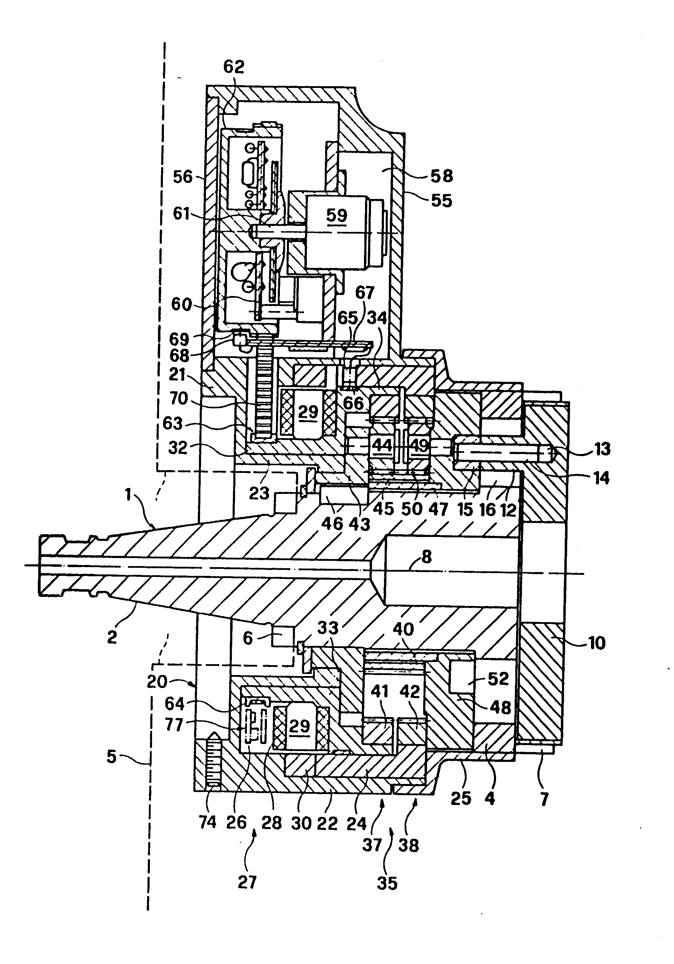

8. Plandreh- und Ausdreh-Kopf nach einem der Ansprüche 1 bis 5, dadurch gekennzeichnet, dass sich ein Messmittel (77), z.B. ein Tachogenerator oder ein Impulsgeber (in Fig. 1 strichpunktiert dargestellt) im Ringraum (26) des Gehäuses (20) befindet und ohne Zwischenschaltung eines Getriebes direkt auf dem drehbaren Teil (32, 33, 34) angeordnet ist womit die Drehgeschwindigkeit, die Lageänderung oder die absolute Position des drehbaren Teils erfasst wird.

9. Plandreh- und Ausdreh-Kopf nach einem der Ansprüche 1 bis 8, dadurch gekennzeichnet, dass das Gehäuse (20) an dem Aussenumfang des aussenliegenden Zylinderteils (22) eine Abdeckung (25) trägt, die sich zum Schutz des Ueberlagerungsgetriebes (35) bis zum Mitnehmerflansch (4) des Antriebskörpers (1) erstreckt.

0214583

10. Plandreh- und Ausdreh-Kopf nach einem der Ansprüche 1
    bis 7 und 9, dadurch gekennzeichnet, dass sich in der
    Aussparung (58) eine elektronische Schaltung (67)
    befindet, welche aufgrund der unterschiedlichen
    Drehwinkel einer Riemenscheibe (62) und der Lagerhülse
    (32) sowie einer Codierung auf den Codestreifen (66,
    69) in der Lage ist, den Schaltzustand der
    Signalgeber  (65, 68) als Absolutposition der Spirale
    (52) und somit auch des Planschlittens (10) zu
    interpretieren und als logischen Pegel an einen
    Prozessrechner weiterzugeben.

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,X | DE-A-2 143 924 (BOHLE) <br><br> * Seite 7, Zeilen 1-20; Figur 1 * <br><br> --- | 1,3,6,7 | B 23 B 29/034 |
| A | FR-A-1 150 143 (REALISATIONS ET ETUDES MECANIQUES) <br><br> --- | 4 | |
| A | DE-A-2 014 690 (EMW) <br><br> --- | | |
| A | DE-A-3 300 803 (TOSHIBA) <br><br> ----- | | |

|  |
|---|
| **RECHERCHIERTE SACHGEBIETE (Int Cl 4)** |
| B 23 B 29/00 |

Der vorliegende Recherchenbericht wurde für alle Patentansprüche erstellt

| Recherchenort | Abschlußdatum der Recherche | Prüfer |
|---|---|---|
| DEN HAAG | 27-11-1986 | BOGAERT F.L. |

**KATEGORIE DER GENANNTEN DOKUMENTE**
X : von besonderer Bedeutung allein betrachtet
Y : von besonderer Bedeutung in Verbindung mit einer anderen Veroffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veroffentlicht worden ist
D : in der Anmeldung angefuhrtes Dokument
L : aus andern Grunden angefuhrtes Dokument

& : Mitglied der gleichen Patentfamilie, uberein-stimmendes Dokument